# FASCICULE DE BREVET EUROPEEN

(11) **EP 4 384 775 B1**
(45) Date de publication et mention de la délivrance du brevet: **19.02.2025**
(21) Numéro de dépôt: 22761241.3
(22) Date de dépôt: 10.08.2022
(51) Int. Cl.: G01B 17/02, G01N 29/04, G01N 29/07, G01N 29/26, G01N 29/44, G01N 29/48

(54) **PROCÉDÉ DE RECONSTRUCTION D'UN PROFIL D'ÉPAISSEUR DE PIÈCE À CONTROLER**
METHODE ZUR REKONSTRUKTION EINES DICKENPROFILS EINES ZU INSPIZIERENDEN OBJEKTS
METHOD OF RECONSTRUCTING A THICKNESS PROFILE OF A PIECE TO BE INSPECTED

(30) Priorité: 12.08.2021 FR 2108669
(43) Date de publication de la demande: 19.06.2024
(73) Titulaire: Vallourec Tubes France, 92190 Meudon (FR)
(72) Inventeur: LAZZARI, Olivier, 92190 MEUDON (FR); HAOUA, Jimmy, 92190 MEUDON (FR)
(74) Mandataire: Mbacke, Mactar
(86) Numéro de dépôt international: PCT/EP2022/072421
(87) Numéro de publication internationale: WO 2023/017070

(56) Documents cités:
- JP-A- 2011 247 649
- US-A1- 2011 120 223

## Description

### Domaine technique

L'invention se rapporte au domaine des contrôles non destructifs tel qu'un contrôle de conformité non destructif de produits métalliques. L'invention se rapporte plus particulièrement au contrôle par ultrasons par reconstruction du profil d'épaisseur d'une pièce à contrôler.

JP 2011 247649 A divulgue un procédé d'identification de la forme de la surface d'une pièce d'essai de détection de défauts par ondes ultrasoniques.

### Arrière-plan technologique

Des tubes métalliques sont largement utilisés dans différents domaines de l'industrie de l'énergie tels que la production électrique, le pétrole et le gaz, ainsi que dans la construction mécanique. Comme la plupart des produits métallurgiques, les tubes sont susceptibles de présenter des défauts liés à leur fabrication, tels que des défauts de dimensionnement, des inclusions de matière dans l'acier, des fissures sur leur surface interne ou leur surface externe, ou encore des porosités. De manière générale, les tubes doivent répondre à des dimensionnement et profils précis afin de garantir leur résistance mécanique en service.

Les tubes sont donc contrôlés après leur fabrication pour y détecter d'éventuels défauts, mais aussi, le cas échéant, pour déterminer des informations utiles à l'évaluation de la dangerosité de ces défauts et la satisfaction de ces tubes à des normes.

Pour les tubes présentant un profil dont les surfaces externes et internes sont parallèles, on utilise des techniques de contrôle non destructif à l'aide d'ondes ultrasonores afin de déterminer la géométrie réelle du tube et s'assurer que cette géométrie réelle du tube correspond à la géométrie désirée, notamment en termes d'épaisseur et d'excentration. Pour cela, on fait se propager des ondes ultrasonores dans le tube et l'on recherche, parmi les ondes réfléchies par le tube, celles qui sont représentatives de la géométrie du tube.

Cependant, pour les tubes présentant des profils complexes dans lesquels la surface externe et la surface interne du tube ne sont pas parallèles, la réflexion des ondes ultrasonores sur la surface externe et/ou la surface interne du tube ne permet pas l'utilisation directe de la méthode utilisée dans le cadre des tubes dont la surface externe et la surface interne sont parallèles. En effet, si une onde arrive perpendiculairement à la surface externe et/ou la surface interne du tube, elle est réfléchie selon la même trajectoire par ladite surface. Mais, lorsque l'onde ultrasonore arrive avec une inclinaison sur la surface externe et/ou la surface interne du tube, elle est réfléchie selon une trajectoire décrite par la loi de Snell-Descartes, qui ne correspond pas à une mesure d'épaisseur. Cela rend l'utilisation d'ondes ultrasonores dans le cadre d'éléments tubulaires dont la surface externe et la surface interne ne sont pas parallèles problématique pour effectuer des mesures dimensionnelles.

Pour éviter les problèmes liés à la réflexion des ondes dans le cadre d'un tube présentant un profil d'épaisseur complexe, on détermine généralement dans un premier temps le profil de la surface externe du tube, par exemple au moyen d'ondes ultrasonores. Puis, dans un second temps, on utilise généralement un système de pantographe qui permet de reproduire manuellement à l'identique le profil interne du tube. Cependant, ce type de dispositif est long d'utilisation et présente un degré de précision grandement dépendant de l'habileté de l'utilisateur du pantographe.

Il existe donc un besoin de procédé de reconstruction de profil d'épaisseur de tube complexe permettant d'obtenir des données représentatives du profil de la surface interne de façon rapide et fiable.

### Résumé

Une idée à la base de l'invention est de permettre la reconstruction d'un profil d'épaisseur d'une pièce à contrôler de façon rapide et fiable. En particulier, une idée à la base de l'invention est de permettre la reconstruction de la surface interne d'une pièce à contrôler présentant des formes complexes, typiquement présentant au moins une portion dans laquelle la surface interne et la surface externe ne sont pas parallèles. En outre, une idée à la base de l'invention est de permettre cette reconstruction du profil d'épaisseur au moyen d'ondes ultrasonores malgré la présence de surface externe et interne non parallèles.

Pour cela, l'invention fournit un procédé de reconstruction d'un profil d'épaisseur de pièce à contrôler, de préférence métallique, ladite pièce à contrôler présentant une première surface et une deuxième surface,
le procédé comportant, pour une pluralité de points d'émission distincts, les étapes de :
   - pour un point d'émission courant de la pluralité de points d'émission distincts, émettre depuis un transducteur une pluralité de tirs ultrasonores en direction de la première surface de la pièce à contrôler,
   - recevoir par le transducteur durant une fenêtre temporelle des ondes ultrasonores,
   - générer une pluralité de signaux d'écho de fond, chaque signal d'écho de fond étant associé à un tir ultrasonore respectif, chaque signal d'écho de fond correspondant à une onde ultrasonore réfléchie par la deuxième surface de la pièce à contrôler et reçue par le transducteur,

   - sélectionner un tir parmi la pluralité de tirs, ledit tir sélectionné présentant le signal d'écho de fond de plus grande amplitude parmi les signaux d'échos de fond,
   - calculer pour ledit tir sélectionné un temps de vol de fond correspondant au laps de temps entre l'instant de transmission dudit tir sélectionné de l'extérieur à l'intérieur de la pièce à contrôler et un instant de contact dudit tir sélectionné avec la deuxième surface de la pièce à contrôler,
   - calculer les coordonnées d'un point de contact de surface pour ledit tir sélectionné, lesdites coordonnées comportant une coordonnée axiale le long d'un axe longitudinal de la pièce à contrôler et une coordonnée radiale le long d'un axe radial perpendiculaire audit axe longitudinal de la pièce à contrôler, ledit point de contact de surface correspondant au point d'impact du tir sélectionné sur la première surface de la pièce à contrôler,
   - calculer un ensemble de positions potentielles de la deuxième surface de la pièce à contrôler en fonction du temps de vol de fond, des coordonnées du point de contact de surface et d'un milieu de propagation dans la pièce à contrôler,
le procédé comportant en outre l'étape de calculer le profil de la deuxième surface de la pièce à contrôler par jonction de portions disjointes des ensembles de positions potentielles de la deuxième surface calculés pour la pluralité de points d'émissions distincts.

Grâce à ces caractéristiques, il est possible de reconstruire le profil de la deuxième surface de la pièce à contrôler au moyen de tirs ultrasonores de façon fiable et rapide. En particulier, il est possible de reconstruire le profil de la deuxième surface de la pièce à contrôler y compris lorsque cette deuxième surface n'est pas parallèle à la première surface de la pièce à contrôler, c'est à dire dans le cadre d'une pièce présentant des variations d'épaisseur le long de son axe longitudinal.

L'utilisation de tirs ultrasonores permet un traitement rapide de la pièce à contrôler afin de déterminer le profil de sa deuxième surface. En outre, la génération d'une pluralité de tirs ultrasonores pour chaque point d'émission permet la reconstruction du profil de la deuxième surface de la pièce à contrôler malgré la présence de variation de la pente de ladite deuxième surface. En particulier, cette pluralité de tirs ultrasonores permet de générer un balayage angulaire de sorte que, pour chaque position d'émission le long de l'axe longitudinal de la pièce à contrôler, il est possible d'obtenir des informations relatives à la pièce au moyen d'un tir dont l'orientation angulaire, une fois transmis dans la pièce, est perpendiculaire à la deuxième surface de la pièce à contrôler. Ainsi, pour chaque position du point d'émission, on peut obtenir un ensemble de positions potentielles de la deuxième surface. Dès lors, la liaison des portions disjointes de ces ensembles permet de délimiter le profil de la deuxième surface, l'utilisation de ces portions disjointes des ensembles de positions potentielles calculés permettant de connaître la position de la deuxième surface malgré l'absence d'information sur l'orientation des tirs ultrasonores.

Selon des modes de réalisation, un tel procédé de reconstruction de profil d'épaisseur peut comporter une ou plusieurs des caractéristiques suivantes.

Selon un mode de réalisation, des ou chaque tir ultrasonore de la pluralité de tirs ultrasonores présentent des angles d'émission respectifs, préférablement situés dans un plan d'émission thêta parallèle à l'axe longitudinal de la pièce à contrôler, à un instant d'émission courant, de manière à générer pour le point d'émission courant un balayage angulaire d'émission.

Selon un mode de réalisation, l'étape de réception par le transducteur des ondes ultrasonores est réalisée pour une fenêtre temporelle respective pour un, plusieurs ou chaque tir de la pluralité de tirs ultrasonores. Selon un mode de réalisation, l'étape de réception par le transducteur des ondes ultrasonores est réalisée au cours d'une même fenêtre temporelle pour la pluralité de tirs distincts du point d'émission courant.

Selon un mode de réalisation, la réception par le transducteur des ondes ultrasonores est réalisée de manière à recevoir des ondes réfléchies par la pièce à contrôler en réponse au tir courant de ladite pluralité de tirs.

L'ensemble des positions potentielles peut prendre différentes formes. Selon un mode de réalisation, pour chaque point d'émission courant, l'ensemble des positions potentielles de la deuxième surface est continu de manière à former un arc de cercle, la jonction des ensembles des positions comporte la jonction des portions disjointes desdits arcs de cercles.

Selon un mode de réalisation, pour chaque point d'émission courant, l'ensemble des positions potentielles de la deuxième surface est continu de manière à former un cercle, la jonction des ensembles des positions comporte la jonction des portions disjointes desdits cercles.

Selon un mode de réalisation, le procédé comporte en outre, pour un, plusieurs ou chaque point d'émission de la pluralité de points d'émission distincts, les étapes de :
- calculer des points d'intersection de fond entre une droite orientée radialement et passant par ledit point d'émission et les ensembles de positions potentielles de la deuxième surface calculés pour les différents points d'émission de la pluralité de points d'émission distincts,
- sélectionner un point d'intersection de fond parmi lesdits points d'intersection de fond calculés, ledit point d'intersection de fond sélectionné étant le plus proche de l'axe longitudinal de la pièce à contrôler, par exemple le plus éloigné dudit point d'émission, parmi les points d'intersection de fond calculés, ledit point d'intersection sélectionné correspondant au point de la deuxième surface de la pièce à contrôler au niveau d'une droite orientée radialement passant par le point d'émission,
la jonction des ensembles des positions potentielles de la deuxième surface comporte la jonction des points d'intersection de fond sélectionnés.

Selon un mode de réalisation, le tir sélectionné est un premier tir sélectionné, le procédé comporte en outre, pour chaque tir de la pluralité de tirs du point d'émission courant, les étapes de :
- générer une pluralité de signaux d'écho d'interface, chaque signal d'écho d'interface étant associé à un tir ultrasonore respectif de la pluralité de tirs, chaque signal d'écho d'interface correspondant une onde ultrasonore réfléchie par la première surface de la pièce à contrôler et reçue par le transducteur,
- sélectionner un deuxième tir parmi la pluralité de tirs, ledit deuxième tir sélectionné présentant le signal d'écho d'interface de plus grande amplitude parmi les signaux d'échos d'interface,
- calculer pour ledit deuxième tir sélectionné un temps de vol d'interface correspondant au laps de temps entre l'instant d'émission dudit deuxième tir sélectionné et un instant de contact dudit deuxième tir sélectionné avec la première surface de la pièce à contrôler,
- calculer un ensemble de positions potentielles de la première surface de la pièce à contrôler en fonction du temps de vol d'interface, des coordonnées du point d'émission courant et d'un milieu de propagation entre le point d'émission courant et la pièce à contrôler,
le procédé comportant en outre l'étape de calculer le profil de la première surface de la pièce à contrôler par jonction de portions disjointes des ensembles de positions potentielles de la première surface calculés pour la pluralité de points d'émissions distincts.

Grâce à ces caractéristiques, il est possible de reconstruire à la fois la première surface et la deuxième surface de la pièce à contrôler à partir d'une même série de tirs ultrasonores distincts. Ainsi, le procédé selon l'invention permet de reconstruire le profil d'épaisseur de la pièce à contrôler de façon simple et rapide au moyen d'une même série de tirs ultrasonores, quelles que soient les orientations respectives des premières et deuxièmes surfaces et l'orientation précise du transducteur en direction de la pièce à contrôler.

Selon un mode de réalisation, l'étape d'émettre une pluralité de tirs ultrasonores est réalisée au moyen du capteur, le procédé comportant une étape de déplacement dudit capteur longitudinalement, c'est-à-dire le long de l'axe longitudinal de la pièce à contrôler, et radialement, c'est-à-dire perpendiculairement à l'axe longitudinal de la pièce à contrôler. Selon un mode de réalisation, un tel capteur est apte à émettre une onde ultrasonore depuis le point d'émission et à recevoir au niveau dudit point d'émission des ondes ultrasonores, par exemple des ondes ultrasonores résultant de la réflexion sur la pièce à contrôler d'ondes ultrasonores émises par le capteur.

Le procédé est ainsi simple à mettre en œuvre puisqu'un même capteur permet à la fois l'émission et la réception des ondes ultrasonores permettant l'analyse de la pièce à contrôler. En outre, le déplacement de ce capteur permet de déterminer le profil d'épaisseur de la pièce à contrôler de façon simple et rapide le long de l'axe longitudinal de ladite pièce.

Selon un mode de réalisation, le capteur est monté sur un boîtier, ledit boîtier comportant des points d'appui, par exemple formés par les extrémités de bras montés sur ledit boîtier, maintenus en contact de la première surface de la pièce à contrôler au cours du déplacement du capteur. Selon un mode de réalisation, le capteur est centré sur le boîtier de sorte que les tirs ultrasonores émis par le capteur lors des étapes d'émission de tirs ultrasonores soient émis depuis le centre de rotation du boîtier à une distance constante de ladite première surface de la pièce. Selon un mode de réalisation, les bras présentent une longueur déterminée de sorte que la position du capteur par rapport à la pièce à contrôler soit déterminable.

Selon un mode de réalisation, le capteur est positionné à équidistance des points de contact avec la première surface de la pièce à contrôler, par exemple à équidistance de chacune des extrémités des bras qui forment lesdits points d'appui.

Grâce à ces caractéristiques, il est possible de déplacer le capteur le long de la pièce à contrôler de façon simple et fiable. En particulier, on s'assure grâce à un tel capteur et à un tel boîtier portant le capteur que l'orientation du balayage ultrasonore reste dirigée vers la pièce à contrôler. En outre, un tel boîtier permet de maintenir une distance radiale entre le point d'émission des tirs et la première surface de la pièce à contrôler sensiblement constante malgré les variations de pente de ladite première surface.

Selon un mode de réalisation, les tirs ultrasonores émis depuis un point d'émission respectif sont émis selon un balayage angulaire compris entre 0° et 30° de part et d'autre d'une droite perpendiculaire à une face du boitier sur laquelle est monté le capteur et passant par le point d'émission dudit capteur. Selon un mode de réalisation, les tirs ultrasonores émis depuis un point d'émission respectif sont émis selon un balayage angulaire de 60°, 30° de part et d'autre d'une droite perpendiculaire à une face du boitier sur laquelle est montée le capteur et passant par le point d'émission dudit capteur, ladite droite étant par exemple parallèle aux bras du boitier. Il est préférable d'éviter un balayage angulaire selon un angle trop important afin d'éviter des échos géométriques non désirés. Ainsi, de préférence, ce balayage angulaire est réalisé sur une plage angulaire inférieure ou égale à 30°, par exemple de 2×15°, de part et d'autre d'une droite parallèle aux bras du boîtier. Avantageusement, cet angle est déterminé en fonction de la géométrie théorique, ou nominale, de la pièce à contrôler, cet angle étant sensiblement égal à l'angle maximal entre les surfaces interne et externe de ladite pièce.

Grâce à ces caractéristiques, le balayage se fait sur un angle suffisamment important pour s'assurer que la plus courte distance entre le point d'émission et la première surface de la pièce à contrôler est orientée selon un angle compris dans ledit balayage angulaire. En particulier, avec des tirs ultrasonores émis depuis un capteur monté sur un boîtier tel que ci-dessus, les variations d'orientation du capteur sont limitées malgré les variations de la surface externe de la pièce à contrôler ce qui permet de s'assurer qu'un balayage angulaire tel que décrit ci-dessus donne un tir selon l'orientation de distance la plus courte entre le capteur et la surface externe de la pièce. En outre, un tel angle permet de s'assurer qu'au moins un tir ultrasonore se propage dans la pièce à contrôler avec une orientation perpendiculaire à la deuxième surface, y compris en cas d'angle important entre les pentes de la première surface et de la deuxième surface.

Selon un mode de réalisation, la pièce est une pièce de forme complexe présentant des variations d'un diamètre interne et/ou d'un diamètre externe de ladite pièce le long de l'axe longitudinal de ladite pièce.

Selon un mode de réalisation, le procédé comporte en outre une étape d'application d'une loi de retard respective pour un, plusieurs ou chaque tir de la pluralité de tirs émis pour le point d'émission courant de la pluralité de tirs.

L'application d'une loi de retard permet avantageusement de générer une pluralité de tirs selon le balayage angulaire décrit ci-dessus pour un, plusieurs ou chaque tir de la pluralité de tirs.

Les coordonnées d'un ou de différents points d'émissions peuvent être obtenues de différentes manières. Selon un mode de réalisation, le procédé comporte en outre, pour un plusieurs ou chaque point d'émission, une étape de détermination des coordonnées dudit point d'émission de la pluralité de tirs. Selon un mode de réalisation, les coordonnées des points d'émission sont préétablies, par exemple au moyen d'un cheminement préétabli du capteur qui définit donc les différentes positions successives des points d'émissions.

La détermination des coordonnées des points d'émission peut être réalisée de nombreuses manières. Selon un mode de réalisation, la détermination des coordonnées du point d'émission est réalisée au moyen d'un codeur à fil. Un tel codeur à fil est de préférence attaché à une coordonnée identique à celle du point d'émission du capteur, correspondant préférentiellement aux coordonnées du point de rotation du boîtier lorsque les bras sont maintenus en appui contre la première surface. Selon un mode de réalisation, de telles coordonnées sont déterminées en consultant une base de données stockant lesdites coordonnées en fonction du temps écoulé depuis un instant de démarrage du procédé. Selon un mode de réalisation, ces coordonnées sont déterminées au moyen d'un capteur de position.

Selon un mode de réalisation, le procédé comporte en outre une étape de correction des temps de vols calculés. Une telle correction peut être réalisée de nombreuses manières. Selon un mode de réalisation, la correction comporte une étape de comparaison avec un seuil d'amplitude pour éviter la présence de bruit dans la détermination des échos de fond et/ou des échos d'interface. Selon un mode de réalisation, la correction comporte une étape de décalage d'une longueur d'onde prédéterminée de l'amplitude calculée pour l'écho de fond et/ou l'écho d'interface. Ce décalage est par exemple un décalage d'une demi-longueur d'onde, si la première alternance du train d'ondes à dépasser le seuil de détection varie avec la position longitudinale du capteur, en raison de la variation d'épaisseur de la pièce.

Le procédé selon l'invention peut être appliqué à de nombreux types de pièces à contrôler présentant une première surface et une deuxième surface. Ainsi, le procédé selon l'invention peut comporter une étape de positionnement du capteur à l'extérieur d'une pièce à contrôler, par exemple un tube métallique, la première surface correspondant alors à la surface externe de la pièce à contrôler, typiquement la surface externe du tube, et la deuxième surface correspondant à la surface interne de la pièce à contrôler, typiquement la surface interne du tube. Dans un autre mode de réalisation, le procédé comporte une étape de positionnement du capteur à l'intérieur d'une pièce à contrôler, par exemple un tube métallique, la première surface correspondant alors à la surface interne de la pièce à contrôler, typiquement la surface interne du tube, et la deuxième surface correspondant à la surface externe de la pièce à contrôler, typiquement la surface externe du tube.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 est une représentation schématique d'une coupe longitudinale d'une paroi d'élément tubulaire et d'un boîtier comportant un capteur ultrasonore, le boîtier étant illustré en différentes positions le long de l'élément tubulaire.
La figure 2 est un graphique illustrant les échos d'interface et de fond illustrant l'élément tubulaire de la figure 1, lesdits échos d'interface et échos de fond étant générés grâce au boîtier de la figure 1 au cours d'un déplacement dudit boîtier le long de l'élément tubulaire.
La figure 3 est une représentation schématique d'un élément tubulaire dont le profil est en cours de reconstruction au moyen d'un mode de réalisation du procédé selon l'invention.
La figure 4 est une représentation schématique illustrant la reconstruction du profil d'épaisseur obtenu au moyen d'un mode de réalisation du procédé selon l'invention par comparaison avec la pièce à contrôler dont le profil d'épaisseur est reconstruit.
La figure 5 est une représentation schématique en trois dimensions, obtenue au moyen du procédé de reconstruction de profil d'épaisseur utilisé au regard de la figure 4 et appliqué selon des orientations circonférentielles distinctes de la pièce à contrôler.

### Description des modes de réalisation

Des tubes métalliques sont largement utilisés dans différents domaines de l'industrie de l'énergie tels que la production électrique, le pétrole et le gaz, ainsi que dans la construction mécanique. Du fait des nombreuses contraintes que subissent ces tubes métalliques aussi bien lors de leur installation que durant leur exploitation, ils doivent répondre à des normes strictes afin d'éviter toute dégradation et/ou toute fuite dans l'environnement. En particulier, ces tubes doivent répondre à des contraintes de dimensionnement précises, ce qui nécessite de s'assurer que le profil du tube correspond bien au profil souhaité.

Certains tubes peuvent présenter des formes complexes avec des variations de leurs diamètres interne et/ou externe le long d'un axe longitudinal. Ces variations du diamètre interne et/ou du diamètre externe ne sont pas nécessairement uniformes et la surface interne du tube et la surface externe du tube peuvent présenter des pentes distinctes par rapport à l'axe longitudinal du tube. Des tubes avec de telles formes complexes présentent donc des surfaces externes et internes qui ne sont pas nécessairement parallèles ce qui génère des variations d'épaisseur le long de leur axe longitudinal.

Connaître le profil d'épaisseur de tubes de forme complexe permet de s'assurer de leur conformité au regard des spécifications. Or, un tel profil d'épaisseur s'avérer difficile à mesurer.

La présente invention permet d'effectuer de façon fiable la mesure par ultrasons du profil d'épaisseur de pièce à contrôler, par exemple un tube ou une turbine, malgré le fait que les deux surfaces définissant le profil d'épaisseur de la pièce à contrôler ne soient pas parallèles. En particulier, la présente invention permet de reconstruire le profil d'épaisseur d'une pièce à contrôler au moyen d'un capteur et de façon rapide et fiable, par exemple sans nécessiter de cuve pour inspection en immersion ou de lois de retard complexes/auto adaptatives.

Dans la description et les figures ci-dessous, l'axe X correspond à l'axe longitudinal de l'élément tubulaire. Par convention, l'orientation « radiale » est dirigée orthogonalement à l'axe X et l'orientation axiale est dirigée parallèlement à l'axe X. Les termes « externe » et « interne » sont utilisés pour définir la position relative d'un élément, par référence à l'axe X, un élément proche de l'axe X est ainsi qualifié d'interne par opposition à un élément externe situé radialement en périphérie.

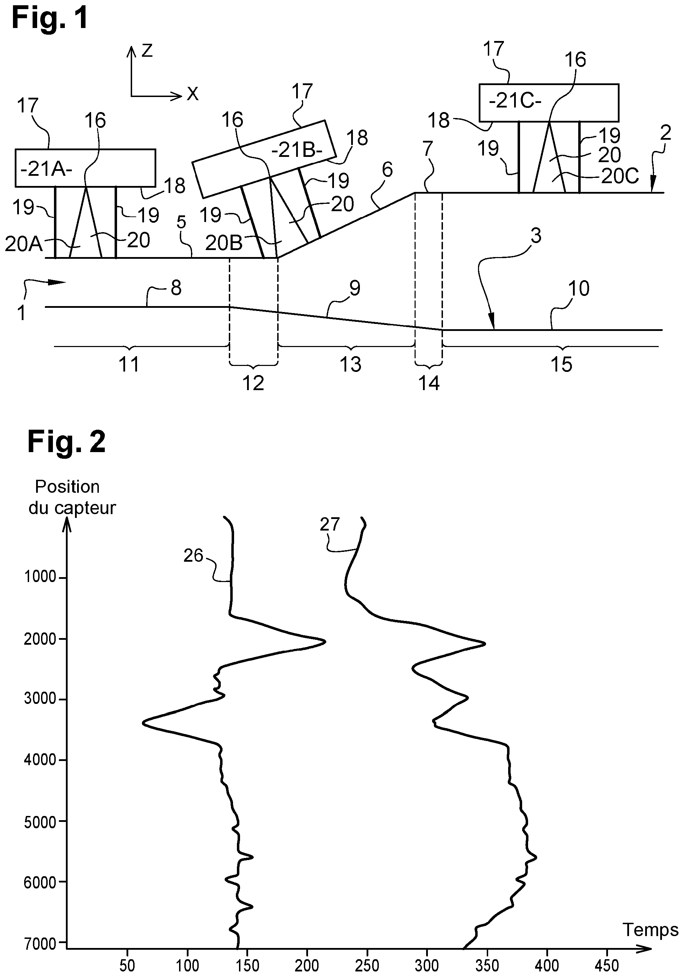

La figure 1 illustre schématiquement une paroi 1 d'élément tubulaire dont le profil doit être reconstruit, par exemple pour vérification de sa conformité au regard de spécifications données. Cette paroi 1 présente une surface externe 2 et une surface interne 3 qui définissent conjointement une épaisseur de la paroi 1 le long d'un axe longitudinal X de l'élément tubulaire.

La surface externe 2 illustrée sur la figure 1 présente, successivement depuis la gauche vers la droite de la figure 1, une première portion 5 parallèle à l'axe longitudinal X, une deuxième portion 6 présentant un angle α positif avec l'axe longitudinal X, et une troisième portion 7 parallèle à l'axe longitudinal X.

La surface interne 3 illustrée sur la figure 1 présente, successivement depuis la gauche vers la droite de la figure 1, une première portion 8 parallèle à l'axe longitudinal X, une deuxième portion 9 présentant un angle β négatif avec l'axe longitudinal X, et une troisième portion 10 parallèle à l'axe longitudinal X.

Les premières, deuxièmes et troisièmes portions respectivement 5, 6 et 7 pour la surface externe 2 et 8, 9 et 10 pour la surface interne 3 ne présentent pas les mêmes longueurs le long de l'axe longitudinal X. La paroi 1 présente ainsi, successivement de la gauche vers la droite de la figure 1, un premier tronçon 11, un deuxième tronçon 12, un troisième tronçon 13, un quatrième tronçon 14 et un cinquième tronçon 15. Le premier tronçon 11 présente une épaisseur délimitée par la première portion 5 de la surface externe 2 et la première portion 8 de la surface interne 3. Le deuxième tronçon 12 présente une épaisseur délimitée par la deuxième portion 6 de la surface externe 2 et la première portion 8 de la surface interne 3. Le troisième tronçon 13 présente une épaisseur délimitée par la deuxième portion 6 de la surface externe 2 et la deuxième portion 9 de la surface interne 3. Le quatrième tronçon 14 présente une épaisseur délimitée par la troisième portion 7 de la surface externe 2 et la deuxième portion 9 de la surface interne 3. Enfin, le cinquième tronçon 15 présente une épaisseur délimitée par la troisième portion 7 de la surface externe 2 et la troisième portion 10 de la surface interne 3.

Comme illustré sur la figure 1, la surface externe 2 et la surface interne 3 sont parallèles dans le premier tronçon 11 et le cinquième tronçon 15. Ainsi, l'épaisseur de la paroi 1 est constante dans le premier tronçon 11 et le cinquième tronçon 15. Par ailleurs, la surface externe 2 et la surface interne 3 ne sont pas parallèles dans le deuxième tronçon 12, le troisième tronçon 13 et le quatrième tronçon 14. Ainsi, l'épaisseur de la paroi 1 augmente, du fait des angles α et/ou β, dans le deuxième tronçon 12, le troisième tronçon 13 et le quatrième tronçon 14.

Pour reconstruire le profil d'épaisseur de la paroi 1, un capteur 16, aussi appelé transducteur, est utilisé. Ce capteur 16 est, dans le mode de réalisation illustré sur la figure 1, un capteur 16 multi-éléments monté sur un boîtier 17. Le boîtier 17 présente une face 18 sur laquelle est monté le capteur 16.

Le capteur 16 est configuré pour émettre une pluralité de tirs ultrasonores avec des orientations respectives distinctes au moyen de lois de retard, par exemple telles que décrites dans le document WO200350527A1. Ces lois de retard permettent au capteur 16 de réaliser cette pluralité de tirs ultrasonores selon un balayage angulaire illustré par le cône référencé 20 sur la figure 1. Un tel balayage angulaire représente par exemple un cône de 30° d'ouverture, par exemple 15° de part et d'autre d'une droite perpendiculaire à la face 18 du boîtier 17 et passant par le point d'émission du capteur 16.

Par ailleurs, le boîtier 17 présente deux bras 19 de longueur identique et prédéterminée faisant saillie du boîtier 17 depuis la face 18. Ces bras 19 se développent perpendiculairement à la face 18. Le capteur 16 est agencé à équidistance des bras 19.

Un dispositif de localisation est également associé au capteur 16 afin de connaître de façon précise la position du capteur 16, longitudinalement et radialement, et donc de connaître précisément les coordonnées du point d'émission des tirs ultrasonores. Dans un mode de réalisation préférentiel, ce dispositif de localisation est un codeur à fil (non illustré) connecté précisément sur le capteur 16 aux mêmes coordonnées radiale et longitudinale que le point d'émission des ultrasons. D'autres dispositifs de localisation peuvent toutefois être utilisés comme des détecteurs laser ou autre.

Afin de reconstruire le profil d'épaisseur de la paroi 1, le capteur 16 est déplacé le long de la paroi 1. Pour cela, le boîtier 17 est positionné avec la face 18 en vis-à-vis de la paroi 1 de manière que le capteur 16 soit apte à émettre des ondes ultrasonores depuis cette face 18 en direction de la surface externe 2 de la paroi 1. En outre, le boîtier 17 est positionné de sorte que les bras 19 soient en appui sur la surface externe 2.

Le boîtier 17 est ensuite déplacé le long de l'axe longitudinal X en maintenant les bras 19 en appui contre la surface externe 2. Ce contact maintenu entre les bras 19 et la surface externe 2 amène le boîtier 17 à être plus ou moins incliné par rapport à l'axe longitudinal X en fonction de la pente de la surface externe 2 au niveau des points d'appui entre les bras 19 et la surface externe 2, comme illustré par exemple sur la figure 1 par trois positions distinctes 21A, 21B et 21C du boîtier 17. Le point d'émission des tirs ultrasonores par le capteur 16 correspond au point de rotation du boîtier 17 lorsque ledit boîtier 17 se déplace le long de l'axe longitudinal X, le point de rotation étant imposé par une liaison pivot entre le boîtier 17 et une cellule (non représentée) permettant de réaliser le contrôle en immersion de la pièce par le capteur 16.

Pour les différentes positions le long de la paroi 1, le capteur 16 effectue un balayage ultrasonore et les données résultant des balayages effectués à ces différentes positions sont compilées pour reconstruire le profil d'épaisseur de la paroi 1.

Ainsi, pour chaque position du capteur 16 le long de l'axe longitudinal X de l'élément tubulaire, le capteur 16 émet une pluralité de tirs ultrasonores. Chaque tir ultrasonore est émis en direction de la paroi 1 selon une orientation respective au moyen d'une loi de retard. Autrement dit, pour une position courante de la pluralité de positions du capteur 16, une pluralité d'ondes ultrasonores selon des angles respectifs est envoyée en direction de la paroi 1 de manière à former un balayage angulaire 20 d'ondes ultrasonores. La figure 1 illustre un balayage angulaire 20A, 20B et 20C effectué respectivement à chacune des trois positions distinctes 21A, 21B et 21C. Un tel balayage angulaire 20 permet de s'affranchir des changements d'orientation du capteur 16 par rapport à la surface externe 2. En particulier, ce balayage angulaire permet d'obtenir un tir ultrasonore selon une orientation perpendiculaire à la surface externe 2 malgré la rotation du boîtier 17 lors de son déplacement le long de la surface externe 2, par exemple du fait de l'appui d'un des bras 19 sur la première portion 5 de la surface externe 2 alors que le deuxième bras 19 est en appui sur la deuxième portion 6 de la surface externe 2 comme cela est illustré par la position 21B sur la figure 1. De même, ce balayage angulaire permet également de s'assurer qu'au moins un tir va impacter la surface interne 3 selon une orientation perpendiculaire à ladite surface interne 3, malgré le fait que l'orientation du capteur 16 est indépendante de la pente de la surface interne 3 comme par exemple dans les deuxième, troisième et quatrième tronçons 12, 13 et 14 de la paroi 1 illustrés sur la figure 1.

A chaque position courante correspond également une fenêtre temporelle d'écoute au cours de laquelle le capteur 16 reçoit les ondes ultrasonores. Durant cette fenêtre temporelle, le capteur 16 reçoit ainsi des ondes ultrasonores résultant de la réflexion des différents tirs ultrasonores émis à ladite position courante sur la paroi 1. Les ondes ultrasonores reçues pendant cette fenêtre temporelle permettent de générer, pour chaque tir de la pluralité de tirs émis pour la position courante, un A-Scan respectif associé au tir ultrasonore correspondant de la pluralité de tirs émis à cette position courante. Ainsi, pour chaque position courante du capteur 16, il est généré une pluralité de A-Scans représentatifs de la paroi 1 correspondant chacun à un tir selon un angle respectif depuis le capteur 16.

Dans un mode de réalisation préférentiel, une unique fenêtre temporelle d'écoute est utilisée pour l'ensemble des tirs ultrasonores effectués pour la position courante du capteur 16. Une analyse des ondes ultrasonores reçue permet de différencier les ondes ultrasonores reçues par le capteur 16 et de générer pour chaque tir ultrasonore un A-Scan respectif. Dans une variante de réalisation, il est possible de prévoir pour chaque tir ultrasonore émis une fenêtre d'écoute respective et de générer le A-Scan correspondant à ce tir pour ladite fenêtre d'écoute. La génération des A-scans est réalisée par une électronique déportée reliée au capteur 16.

Afin de reconstituer la surface externe de la paroi 1, l'ensemble des A-Scans pour chacune des différentes positions du capteur 16 est analysé. Pour chaque position courante du capteur 16, le A-Scan présentant un écho de surface de plus grande amplitude parmi les A-Scan générés pour ladite position courante du capteur 16 est sélectionné. Un tel écho de surface correspond à la réception par le capteur 16 d'une onde ultrasonore résultant de la réflexion du tir ultrasonore correspondant au A-Scan par la surface externe 2. Ce A-Scan présentant la plus grande amplitude d'écho de surface représente le tir ultrasonore émis depuis le capteur 16 avec une orientation perpendiculaire à la surface externe 2. Le balayage angulaire et cette sélection du A-Scan présentant la plus grande amplitude d'écho de surface permettent de s'affranchir de l'orientation du capteur 16 par rapport à la surface externe 2. Comme expliqué ci-après, la figure 2 illustre l'ensemble des échos de surface 26 des A-Scan sélectionnés pour les différentes positions successives du capteur 16 le long de l'axe longitudinal X.

Pour chaque A-Scan sélectionné, un temps de vol de surface est calculé. Ce temps de vol de surface correspond au laps de temps écoulé entre l'émission du tir ultrasonore correspondant au A-Scan sélectionné et l'impact de ce tir ultrasonore sur la surface externe 2. Autrement dit, ce temps de vol correspond au laps de temps écoulé entre l'émission du tir ultrasonore correspondant au A-Scan sélectionné par le capteur 16 et la réception par ledit capteur 16 de l'écho de surface correspondant à ce tir ultrasonore sélectionné, le tout divisé par deux.

Une distance de surface entre la position courante du capteur 16, déterminé au moyen du capteur à fil relié précisément au point d'émission du capteur 16, c'est à dire au point de rotation du boîtier 17 dans le mode de réalisation décrit ci-dessus, et la surface externe 2. Cette distance de surface est calculée en fonction du temps de vol de surface calculé précédemment, ou directement mesuré sur le A-Scan, en fonction du milieu de propagation entre le capteur 16 et la surface externe 2 et en fonction de la vitesse de propagation du tir ultrasonore dans ledit milieu de propagation.

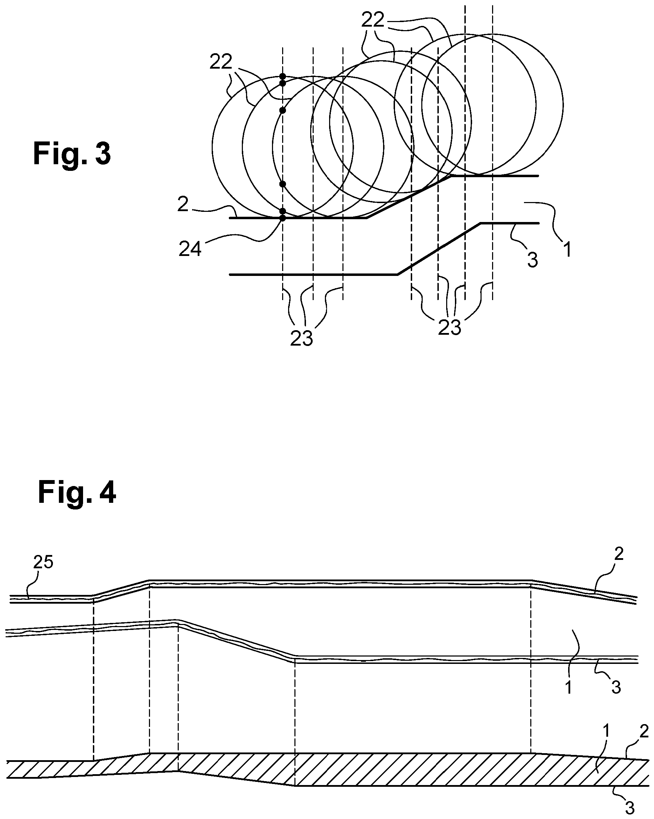

Pour chaque position courante, il est ainsi calculé une telle distance de surface. Un cercle de surface 22 peut alors être tracé pour chaque position courante du capteur 16, ce cercle de surface ayant comme centre les coordonnées longitudinale et radiale de la position courante et comme rayon la distance de surface calculée pour ladite position courante. La figure 3 illustre ainsi une pluralité de cercles de surface 22 pour une pluralité correspondante de position courantes successives.

La surface externe 2 correspond à la liaison des portions disjointes des cercles de surfaces 22 ainsi tracés. Autrement dit, les enveloppes inférieures de ces cercles de surface 22 qui ne sont pas jointives avec d'autres cercles de surfaces 22 représentent l'enveloppe de la surface externe 2. Autrement dit, la jonction des portions des cercles de surface 22 qui ne sont pas situées dans d'autres cercles de surfaces 22 représente la surface externe 2 de la paroi 1.

Selon un mode de réalisation préférentiel et tel qu'illustré sur la figure 3, pour chaque position courante du capteur 16, il est calculé un point d'intersection entre une droite verticale 23 passant par la position axiale du capteur 16 pour ladite position courante du capteur 16, c'est-à-dire le long de l'axe longitudinal X, et chacun des cercles de surface 22 calculés pour les différentes positions du capteur 16. Le point d'intersection le plus proche de l'axe longitudinal X, généralement le plus éloigné du capteur 16, sur cette droite 23 est ensuite sélectionné, ce point d'intersection sélectionné 24 correspondant à la position de la surface externe 2 pour la position axiale courante du capteur 16. Tous les points d'intersection sélectionnés 25 pour les différentes positions courantes du capteur 16 sont alors reliés entre eux pour former la géométrie de la surface externe 2.

La reconstruction de la surface interne 3 est réalisée à partir des balayages angulaires 20 effectués de façon sensiblement analogue à la reconstruction de la surface externe 2 décrite ci-dessus.

Pour chaque position courante du capteur 16, le A-Scan obtenu présentant l'écho de fond avec la plus grande amplitude est sélectionné. Un tel écho de fond correspond à la réception par le capteur 16 de l'onde ultrasonore résultant de la réflexion d'un tir ultrasonore émis, et correspondant audit A-Scan, par la surface interne 3 de la paroi 1. Ce A-Scan sélectionné présentant la plus grande amplitude d'écho de fond correspond au tir ultrasonore de la pluralité de tirs ultrasonores arrivant avec une orientation perpendiculaire à la surface interne 3. Ainsi, cette sélection du A-Scan présentant l'écho de fond de plus grande amplitude permet de s'affranchir d'une part de l'orientation du capteur 16 par rapport à l'axe longitudinal X et, d'autre part, de l'inclinaison de la surface interne 3 par rapport à l'axe longitudinal X au niveau de la position courante du capteur 16. De façon analogue aux échos de surfaces 26 correspondant aux A-Scans sélectionnés pour reconstituer la surface externe 2 comme expliqué ci-dessus, la figure 2 illustre l'ensemble des échos de fond 27 correspondant aux différents A-Scans sélectionnés en fonction de la position du capteur, axe vertical, et du temps, axe horizontal.

Pour chaque A-Scan sélectionné, un temps de vol de fond est calculé. Ce temps de vol de fond correspond au laps de temps écoulé entre l'émission du tir ultrasonore correspondant au A-Scan sélectionné par le capteur 16 et la réception par ledit capteur 16 de l'écho de fond.

Une épaisseur de paroi est ensuite calculée. Cette épaisseur de paroi est calculée en fonction du temps de vol de surface, du temps de vol de fond, du milieu de propagation dans la paroi 1 et de la vitesse de propagation du tir ultrasonore dans ledit milieu de propagation de la paroi 1.

Plus particulièrement, une différence entre le temps de vol de fond et le temps de vol de surface est calculée. Cette différence correspond au laps de temps écoulé entre l'impact du tir ultrasonore sur la surface externe 2 et l'impact sur la surface externe 2 de l'onde ultrasonore réfléchie par la surface interne 3 et résultant dudit tir ultrasonore. Cette différence représente le temps de propagation d'une onde ultrasonore pour faire un aller-retour au travers de la paroi 1. L'épaisseur de la paroi traversée par l'onde ultrasonore pour le tir sélectionné est alors calculée au moyen d'une part de cette différence divisée par deux, pour déterminer le temps de propagation de l'onde ultrasonore correspondant au tir ultrasonore sélectionné pour traverser la paroi 1, et, d'autre part, du milieu de propagation dans la paroi 1 et de la vitesse de propagation d'une onde ultrasonore dans ledit milieu de propagation de la paroi 1.

De façon analogue à la méthode décrite ci-dessus pour la reconstruction de la surface externe 2, l'épaisseur de la paroi calculée permet de reconstruire la surface interne 3 par des cercles de surface interne dont le rayon correspond à l'épaisseur calculée et dont le centre se trouve sur la surface externe 2 reconstruite précédemment.

Pour cela, le point d'impact de la surface externe du tir ultrasonore correspondant au A-Scan sélectionné, c'est-à-dire le A-Scan présentant l'écho de fond le plus important, doit être calculé. Ce point d'impact est calculé en fonction de l'écho de surface dudit A-Scan sélectionné qui permet d'obtenir la distance parcourue par le tir ultrasonore entre le capteur 16 et la surface externe 2, par exemple de façon analogue au calcul de la distance décrit ci-dessus pour la reconstruction de la surface externe 2. Le point d'impact du tir ultrasonore correspondant au A-Scan sélectionné est alors calculé comme correspondant au point d'intersection entre d'une part un cercle dont le centre est le point démission du capteur 16 et le rayon est ladite distance parcourue calculée et, d'autre part, la surface externe 2 dont le profil a été reconstruit précédemment.

Le cas où, pour un même A-Scan sélectionné, deux points d'impacts potentiels du tir ultrasonore correspondant audit A-Scan sur la surface externe 2 sont obtenus n'est pas problématique. En effet, le A-Scan sélectionné présente un angle du tir depuis le capteur 16 connu, de sorte qu'il est possible de savoir auquel des deux points d'impacts potentiels possibles il correspond.

De façon analogue à la reconstruction de la surface externe 2, la reconstruction de la surface interne 3 est réalisée en reliant les portions disjointes, c'est-à-dire les portions qui ne se recouvrent pas, des cercles de surfaces internes calculés pour les différentes positions successives du capteur 16.

Dans un mode de réalisation préférentiel, pour chaque position courante du capteur 16, on calcule l'ensemble des points d'intersection entre d'une part un axe radial passant par la position courante du capteur 16 et, d'autre part, l'ensemble des cercles de surface interne calculés pour les différentes positions du capteur 16. Parmi cet ensemble de points d'intersection, le point d'intersection, , le plus proche de l'axe longitudinal X, généralement correspondant au point le plus éloigné du capteur 16, est alors sélectionné et correspond à la position de la surface interne 3 pour la position axiale courante du capteur 16. L'ensemble des points d'intersection sélectionnés pour les différentes positions du capteur 16 sont alors reliés pour former le profil de la surface interne 3.

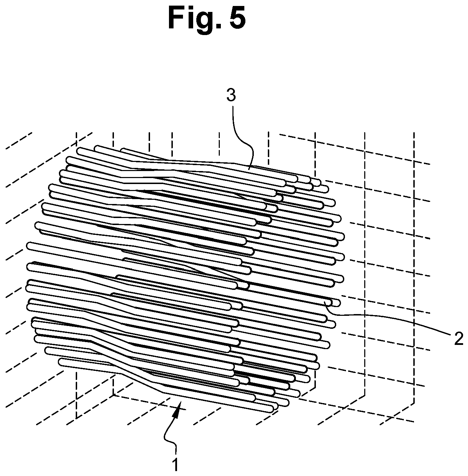

En reconstruisant ainsi le profil de la surface externe 2 et de la surface interne 3, une reconstruction du profil d'épaisseur de la paroi 1 est obtenue comme le montre par exemple la figure 4 qui illustre le profil d'épaisseur de la paroi 1 en partie inférieure de ladite figure 4 par comparaison avec le profil de la paroi 1 tel que reconstitué au moyen du procédé décrit ci-dessus en partie supérieure de ladite figure 4. Cette reconstruction dans un plan de coupe peut être effectuée tout autour de l'élément tubulaire pour obtenir une image en trois dimensions du profil d'épaisseur de la paroi 1 de l'élément tubulaire comme illustré sur la figure 5.

Ce procédé de reconstruction de profil d'épaisseur permet avantageusement d'obtenir un profil de l'épaisseur de la paroi 1 avec un capteur 16 se déplaçant le long de l'axe longitudinal X et dont l'orientation par rapport audit axe longitudinal X peut varier au cours dudit déplacement, rendant le procédé facilement industrialisable. De plus, le fait que le point de rotation du boîtier 17 et le point d'émission du capteur 16 sont superposés permet au capteur d'effectuer une rotation dans la pente de la surface externe 2 sans que cela affecte le résultat.

Dans le mode de réalisation décrit ci-dessus, les tirs ultrasonores sont utilisés à la fois pour reconstruire la surface externe 2 et la surface interne 3. Ceci permet avantageusement au cours d'un seul déplacement du boîtier 17 le long de la paroi 1 d'obtenir l'ensemble des informations permettant de reconstruire le profil d'épaisseur de la paroi 1. Toutefois, le procédé décrit ci-dessus pourrait être utilisé pour reconstruire le profil de la surface interne 3 uniquement, par exemple en obtenant le profil de la surface externe 2 selon une autre méthode et en utilisant les informations sur ce profil de la surface externe pour calculer le profil de la surface interne 3 selon le procédé décrit ci-dessus.

De même, le procédé est décrit ci-dessus dans le cadre d'un boîtier 17 positionné en appui sur la surface externe 2 de l'élément tubulaire. Toutefois, le boîtier pourrait également est positionné dans l'élément tubulaire, par exemple un élément tubulaire de grand diamètre interne, pour déterminer de façon successive le profil de la paroi interne 3 dans un premier temps et le profil de la paroi externe 2 dans un second temps, c'est-à-dire selon un ordre inverse à celui décrit ci-dessus lorsque le boîtier 17 est en appui sur la surface externe 2. Un tel boîtier 17 positionné dans l'élément tubulaire serait alors maintenu en appui contre la surface interne 3 avec sa face 18 présentant le capteur 16 tournée vers la surface interne 3.

## Revendications

1. Procédé de reconstruction d'un profil d'épaisseur de pièce à contrôler, ladite pièce à contrôler présentant une première surface (2) et une deuxième surface (3),
le procédé comportant, pour une pluralité de points d'émission distincts, les étapes de :
- pour un point d'émission courant de la pluralité de points d'émission distincts, émettre depuis un transducteur une pluralité de tirs ultrasonores en direction de la première surface (2) de la pièce à contrôler,
- recevoir par le transducteur durant une fenêtre temporelle des ondes ultrasonores,
- générer une pluralité de signaux d'écho de fond, chaque signal d'écho de fond étant associé à un tir ultrasonore respectif, chaque signal d'écho de fond correspondant à une onde ultrasonore réfléchie par la deuxième surface (3) de la pièce à contrôler et reçue par le transducteur,
- sélectionner un tir parmi la pluralité de tirs, ledit tir sélectionné présentant le signal d'écho de fond de plus grande amplitude parmi les signaux d'échos de fond,
- calculer pour ledit tir sélectionné un temps de vol de fond correspondant au laps de temps entre l'instant de transmission dudit tir sélectionné de l'extérieur à l'intérieur de la pièce à contrôler et un instant de contact dudit tir sélectionné avec la deuxième surface (3) de la pièce à contrôler,
- calculer les coordonnées d'un point de contact de surface pour ledit tir sélectionné, lesdites coordonnées comportant une coordonnée axiale le long d'un axe longitudinal (X) de la pièce à contrôler et une coordonnée radiale le long d'un axe radial perpendiculaire audit axe longitudinal (X) de la pièce à contrôler, ledit point de contact de surface correspondant au point d'impact du tir sélectionné sur la première surface (2) de la pièce à contrôler,
- calculer un ensemble de positions potentielles de la deuxième surface (3) de la pièce à contrôler en fonction du temps de vol de fond, des coordonnées du point de contact de surface et d'un milieu de propagation dans la pièce à contrôler,
le procédé comportant en outre l'étape de calculer le profil de la deuxième surface (3) de la pièce à contrôler par jonction de portions disjointes des ensembles de positions potentielles de la deuxième surface (3) calculés pour la pluralité de points d'émissions distincts.

2. Procédé de reconstruction du profil d'épaisseur d'une pièce à contrôler selon la revendication 1, dans lequel l'ensemble des positions potentielles de la deuxième surface (3) est continu de manière à former un cercle, la jonction des ensembles des positions comporte la jonction des portions disjointes desdits cercles.

3. Procédé de reconstruction du profil d'épaisseur d'une pièce à contrôler selon la revendication 1 ou 2, comportant en outre, pour la pluralité de points d'émission distincts, les étapes de :
- calculer des points d'intersection de fond entre une droite orientée radialement et passant par ledit point d'émission et les ensembles de positions potentielles de la deuxième surface calculés pour les différents points d'émission de la pluralité de points d'émission distincts,
- sélectionner un point d'intersection de fond parmi lesdits points d'intersection de fond calculés, ledit point d'intersection de fond sélectionné étant le plus proche de l'axe longitudinal de la pièce à contrôler parmi les points d'intersection de fond calculés, ledit point d'intersection sélectionné correspondant au point de la deuxième surface de la pièce à contrôler au niveau d'une droite orientée radialement passant par le point d'émission, la jonction des ensembles des positions potentielles de la deuxième surface comporte la jonction des points d'intersection de fond sélectionnés.

4. Procédé de reconstruction du profil d'épaisseur d'une pièce à contrôler selon l'une des revendications précédentes, dans lequel le tir sélectionné est un premier tir sélectionné, le procédé comporte en outre, pour chaque tir de la pluralité de tirs du point d'émission courant, les étapes de :
- générer une pluralité de signaux d'écho d'interface, chaque signal d'écho d'interface étant associé à un tir ultrasonore respectif de la pluralité de tirs, chaque signal d'écho d'interface correspondant une onde ultrasonore réfléchie par la première surface de la pièce à contrôler et reçue par le transducteur,
- sélectionner un deuxième tir parmi la pluralité de tirs, ledit deuxième tir sélectionné présentant le signal d'écho d'interface de plus grande amplitude parmi les signaux d'échos d'interface,
- calculer pour ledit deuxième tir sélectionné un temps de vol d'interface correspondant au laps de temps entre l'instant d'émission dudit deuxième tir sélectionné et un instant de contact dudit deuxième tir sélectionné avec la première surface (2) de la pièce à contrôler,
- calculer un ensemble de positions potentielles (22) de la première surface (2) de la pièce à contrôler en fonction du temps de vol d'interface, des coordonnées du point d'émission courant et d'un milieu de propagation entre le point d'émission courant et la pièce à contrôler, le procédé comportant en outre l'étape de calculer le profil de la première surface de la pièce à contrôler par jonction de portions disjointes des ensembles de positions potentielles (22) de la première surface (2) calculés pour la pluralité de points d'émissions distincts.

5. Procédé de reconstruction du profil d'épaisseur d'une pièce à contrôler selon l'une des revendications précédentes, dans lequel l'étape d'émettre une pluralité de tirs ultrasonores est réalisée au moyen d'un capteur (16) , le procédé comportant une étape de déplacement dudit capteur longitudinalement et radialement.

6. Procédé de reconstruction du profil d'épaisseur d'une pièce à contrôler selon la revendication 5, dans lequel le capteur (16) est monté sur un boîtier (17), ledit boîtier (17) comportant des points d'appui maintenus en contact de la première surface (2) de la pièce à contrôler au cours du déplacement du capteur (16), le capteur (16) étant centré sur le boîtier (17) de sorte que les tirs ultrasonores émis par le capteur (16) lors des étapes d'émission de tirs ultrasonores soient émis depuis le centre de rotation du boîtier (17) à une distance constante de ladite première surface (2) de la pièce.

7. Procédé de reconstruction du profil d'épaisseur d'une pièce à contrôler selon la revendication 6, dans lequel les tirs ultrasonores émis depuis un point d'émission respectif sont émis selon un balayage angulaire compris entre 0° et 30° de part et d'autre d'une droite perpendiculaire à une face (18) du boitier (17) sur laquelle est montée le capteur (16) et passant par le point d'émission dudit capteur.

8. Procédé de reconstruction du profil d'épaisseur d'une pièce à contrôler selon l'une des revendications précédentes, dans lequel la pièce est une pièce de forme complexe présentant des variations d'un diamètre interne et/ou d'un diamètre externe de ladite pièce le long de l'axe longitudinal de ladite pièce.

9. Procédé de reconstruction du profil d'épaisseur d'une pièce à contrôler selon l'une des revendications précédentes, comportant en outre une étape d'application d'une loi de retard respective pour un tir de la pluralité de tirs émis pour le point d'émission courant de la pluralité de tirs ultrasonores.

10. Procédé de reconstruction du profil d'épaisseur d'une pièce à contrôler selon l'une des revendications précédentes, comportant en outre les étapes de déterminer les coordonnées du point d'émission de la pluralité de tirs.

11. Procédé de reconstruction du profil d'épaisseur d'une pièce à contrôler selon la revendication 10, dans lequel la détermination des coordonnées du point d'émission est réalisée au moyen d'un codeur à fil.

12. Procédé de reconstruction du profil d'épaisseur d'une pièce à contrôler selon l'une des revendications précédentes, comportant en outre les étapes de correction des temps de vols calculés.

## Patentansprüche

1. Verfahren zur Rekonstruktion eines Dickenprofils eines zu kontrollierenden Bauteils, wobei das zu kontrollierende Bauteil eine erste Fläche (2) und eine zweite Fläche (3) aufweist, wobei das Verfahren für eine Vielzahl unterschiedlicher Emissionspunkte die Schritte aufweist:
- für einen aktuellen Emissionspunkt der Vielzahl unterschiedlicher Emissionspunkte, Emission ausgehend von einem Wandler einer Vielzahl von Ultraschallschüssen in Richtung der ersten Fläche (2) des zu kontrollierenden Bauteils,
- Empfang von Ultraschallwellen durch den Wandler während eines Zeitfensters,
- Erzeugen einer Vielzahl von Bodenechosignalen, wobei jedes Bodenechosignal einem Ultraschallschuss zugeordnet ist, wobei jedes Bodenechosignal einer von der zweiten Fläche (3) des zu kontrollierenden Bauteils reflektierten und vom Wandler empfangenen Ultraschallwelle entspricht,
- Auswahl eines Schusses unter der Vielzahl von Schüssen, wobei der ausgewählte Schuss das Bodenechosignal größter Amplitude unter den Bodenechosignalen aufweist,
- Berechnen für den ausgewählten Schuss einer Bodenflugzeit entsprechend der Zeitspanne zwischen dem Übertragungszeitpunkt des ausgewählten Schusses von außen nach innen des zu kontrollierenden Bauteils und einem Kontaktzeitpunkt des ausgewählten Schusses mit der zweiten Fläche (3) des zu kontrollierenden Bauteils,
- Berechnen der Koordinaten eines Flächenkontaktpunkts für den ausgewählten Schuss, wobei die Koordinaten eine axiale Koordinate entlang einer Längsachse (X) des zu kontrollierenden Bauteils und eine radiale Koordinate entlang einer radialen Achse lotrecht zur Längsachse (X) des zu kontrollierenden Bauteils aufweisen, wobei der Flächenkontaktpunkt dem Aufprallpunkt des ausgewählten Schusses auf die erste Fläche (2) des zu kontrollierenden Bauteils entspricht,
- Berechnen einer Einheit potenzieller Positionen der zweiten Fläche (3) des zu kontrollierenden Bauteils abhängig von der Bodenflugzeit, den Koordinaten des Flächenkontaktpunkts und einem Ausbreitungsmilieu im zu kontrollierenden Bauteil,
wobei das Verfahren außerdem den Schritt der Berechnung des Profils der zweiten Fläche (3) des zu kontrollierenden Bauteils durch Verbindung von getrennten Abschnitten der Einheiten potenzieller Positionen der zweiten Fläche (3) aufweist, die für die Vielzahl unterschiedlicher Emissionspunkte berechnet werden.

2. Rekonstruktionsverfahren des Dickenprofils eines zu kontrollierenden Bauteils nach Anspruch 1, wobei die Einheit der potenziellen Positionen der zweiten Fläche (3) durchgehend ist, um einen Kreis zu formen, wobei die Verbindung der Einheiten der Positionen die Verbindung der getrennten Abschnitte der Kreise aufweist.

3. Rekonstruktionsverfahren des Dickenprofils eines zu kontrollierenden Bauteils nach Anspruch 1 oder 2, das außerdem für die Vielzahl unterschiedlicher Emissionspunkte die Schritte aufweist:
- Berechnen der Bodenschnittpunkte zwischen einer radial ausgerichteten und durch den Emissionspunkt verlaufenden Geraden und den Einheiten potenzieller Positionen der zweiten Fläche, berechnet für die verschiedenen Emissionspunkte der Vielzahl unterschiedlicher Emissionspunkte,
- Auswahl eines Bodenschnittpunkts unter den berechneten Bodenschnittpunkten, wobei der ausgewählte Bodenschnittpunkt der der Längsachse des zu kontrollierenden Bauteils am nächsten liegende unter den berechneten Bodenschnittpunkten ist, wobei der ausgewählte Schnittpunkt dem Punkt der zweiten Fläche des zu kontrollierenden Bauteils im Bereich einer radial ausgerichteten, durch den Emissionspunkt verlaufenden Geraden entspricht,
die Verbindung der Einheiten der potenziellen Positionen der zweiten Fläche weist die Verbindung der ausgewählten Bodenschnittpunkte auf.

4. Rekonstruktionsverfahren des Dickenprofils eines zu kontrollierenden Bauteils nach einem der vorhergehenden Ansprüche, wobei der ausgewählte Schuss ein erster ausgewählter Schuss ist, das Verfahren weist außerdem für jeden Schuss der Vielzahl von Schüssen des aktuellen Emissionspunkts die Schritte auf:
- Erzeugen einer Vielzahl von Schnittstellenechosignalen, wobei jedes Schnittstellenechosignal einem Ultraschallschuss der Vielzahl von Schüssen zugeordnet ist, wobei jedes Schnittstellenechosignal einer von der ersten Fläche des zu kontrollierenden Bauteils reflektierten und vom entsprechenden Wandler empfangenen Ultraschallwelle entspricht,
- Auswahl eines zweiten Schusses unter der Vielzahl von Schüssen, wobei der zweite ausgewählte Schuss das Schnittstellenechosignal größter Amplitude unter den Schnittstellenechosignalen aufweist,
- Berechnen für den ausgewählten zweiten Schuss einer Schnittstellenflugzeit entsprechend der Zeitspanne zwischen dem Emissionszeitpunkt des ausgewählten zweiten Schusses und einem Kontaktzeitpunkt des ausgewählten zweiten Schusses mit der ersten Fläche (2) des zu kontrollierenden Bauteils,
- Berechnen einer Einheit potenzieller Positionen (22) der ersten Fläche (2) des zu kontrollierenden Bauteils abhängig von der Schnittstellenflugzeit, den Koordinaten des aktuellen Emissionspunkts und einem Ausbreitungsmilieu zwischen dem aktuellen Emissionspunkt und dem zu kontrollierende Bauteil, wobei das Verfahren außerdem den Schritt der Berechnung des Profils der ersten Fläche des zu kontrollierenden Bauteils durch Verbindung von getrennten Abschnitten der Einheiten potenzieller Positionen (22) der ersten Fläche (2) aufweist, die für die Vielzahl unterschiedlicher Emissionspunkte berechnet werden.

5. Rekonstruktionsverfahren des Dickenprofils eines zu kontrollierenden Bauteils nach einem der vorhergehenden Ansprüche, wobei der Schritt der Emission einer Vielzahl von Ultraschallschüssen mittels eines Sensors (16) realisiert wird, wobei das Verfahren einen Schritt der Verschiebung des Sensors in Längs- und Radialrichtung aufweist.

6. Rekonstruktionsverfahren des Dickenprofils eines zu kontrollierenden Bauteils nach Anspruch 5, wobei der Sensor (16) auf ein Gehäuse (17) montiert ist, wobei das Gehäuse (17) Auflagepunkte aufweist, die während der Verschiebung des Sensors (16) mit der ersten Fläche (2) des zu kontrollierenden Bauteils in Kontakt gehalten werden, wobei der Sensor (16) so auf das Gehäuse (17) zentriert ist, dass die vom Sensor (16) während der Emissionsschritte von Ultraschallschüssen emittierten Ultraschallschüsse ausgehend vom Rotationszentrum des Gehäuses (17) in einem konstanten Abstand von der ersten Fläche (2) des Bauteils emittiert werden.

7. Rekonstruktionsverfahren des Dickenprofils eines zu kontrollierenden Bauteils nach Anspruch 6, wobei die ausgehend von einem Emissionspunkt emittierten Ultraschallschüsse gemäß einer Winkelabtastung zwischen 0° und 30° zu beiden Seiten einer Geraden lotrecht zu einer Seite (18) des Gehäuses (17), auf die der Sensor (16) montiert ist und die durch den Emissionspunkt des Sensors verläuft, emittiert werden.

8. Rekonstruktionsverfahren des Dickenprofils eines zu kontrollierenden Bauteils nach einem der vorhergehenden Ansprüche, wobei das Bauteil ein Bauteil komplexer Form ist, das Variationen eines Innendurchmessers und/oder eines Außendurchmessers des Bauteils entlang der Längsachse des Bauteils aufweist.

9. Rekonstruktionsverfahren des Dickenprofils eines zu kontrollierenden Bauteils nach einem der vorhergehenden Ansprüche, das außerdem einen Schritt der Anwendung eines Verzögerungsgesetzes für einen jeweiligen Schuss der Vielzahl von emittierten Schüssen aufweist, die für den aktuellen Emissionspunkt der Vielzahl von Ultraschallschüssen emittiert werden.

10. Rekonstruktionsverfahren des Dickenprofils eines zu kontrollierenden Bauteils nach einem der vorhergehenden Ansprüche, das außerdem die Schritte der Bestimmung der Koordinaten des Emissionspunkts der Vielzahl von Schüssen aufweist.

11. Rekonstruktionsverfahren des Dickenprofils eines zu kontrollierenden Bauteils nach Anspruch 10, wobei die Bestimmung der Koordinaten des Emissionspunkts mittels eines Drahtcodierers durchgeführt wird.

12. Rekonstruktionsverfahren des Dickenprofils eines zu kontrollierenden Bauteils nach einem der vorhergehenden Ansprüche, das außerdem die Korrekturschritte der berechneten Flugzeiten aufweist.

## Claims

1. Method for reconstruction of a thickness profile of a part to be inspected, said part to be inspected having a first surface (2) and a second surface (3),
the method including, at a plurality of distinct emission points, the steps of:
- at a current emission point of the plurality of distinct emission points, emitting from a transducer a plurality of ultrasound firings in the direction of the first surface (2) of the part to be inspected,
- the transducer receiving ultrasound waves during a time window,
- generating a plurality of basic echo signals, each basic echo signal being associated with a respective ultrasound firing, each basic echo signal corresponding to an ultrasound wave reflected by the second surface (3) of the part to be inspected and received by the transducer,
- selecting a firing from the plurality of firings, said selected firing producing the basic echo of greatest amplitude of the basic echo signals,
- calculating for said selected firing a basic flight time corresponding to the time elapsed between the moment of transmission of said selected firing from the exterior to the interior of the part to be inspected and the moment of contact of said selected firing with the second surface (3) of the part to be inspected,
- calculating the coordinates of a surface contact point for said selected firing, said coordinates including an axial coordinate along a longitudinal axis (X) of the part to be inspected and a radial coordinate along a radial axis perpendicular to said longitudinal axis (X) of the part to be inspected, said surface contact point corresponding to the point of impact of the selected firing on the first surface (2) of the part to be inspected,
- calculating a set of potential positions of the second surface (3) of the part to be inspected as a function of the basic flight time, the coordinates of the surface contact point and a propagation medium in said part to be inspected,
the method further including the step of calculating the profile of the second surface (3) of the part to be inspected by joining separate portions of the sets of potential positions of the second surface (3) calculated for the plurality of distinct emission points.

2. Method according to claim 1 for reconstruction of the thickness profile of a part to be inspected, in which the set of potential positions of the second surface (3) is continuous in such a manner as to form a circle, joining the sets of positions including joining the separate portions of said circles.

3. Method according to claim 1 or 2 for reconstruction of the thickness profile of a part to be inspected, further including, for the plurality of distinct emission points, the steps of:
- calculating basic intersection points between a straight line oriented radially and passing through said emission point and the sets of potential positions of the second surface calculated for the various emission points of the plurality of distinct emission points,
- selecting a basic intersection point from said calculated basic intersection points, said selected basic intersection point being the closest to the longitudinal axis of the part to be inspected of the calculated basic intersection points, said selected intersection point corresponding to the point on the second surface of the part to be inspected at the level of a straight line oriented radially and passing through the emission point,
joining the sets of potential positions of the second surface includes joining the selected basic intersection points.

4. Method according to any one of the preceding claims for reconstruction of the thickness profile of a part to be inspected, in which the selected firing is a first selected firing and the method further includes, for each firing of the plurality of firings at the current emission point, the steps of:
- generating a plurality of interface echo signals, each interface echo signal being associated with a respective ultrasound firing of the plurality of firings and each interface echo signal corresponding to an ultrasound wave reflected by the first surface of the part to be inspected and received by the transducer,
- selecting a second firing from the plurality of firings, said selected second firing producing the interface echo signal of greatest amplitude of the interface echo signals,
- calculating for said second selected firing an interface flight time corresponding to the time elapsed between the moment of emission of said second selected firing and the moment of contact of said second selected firing with the first surface (2) of the part to be inspected,
- calculating a set of potential positions (22) of the first surface (2) of the part to be inspected as a function of the interface flight time, the coordinates of the current emission point and a propagation medium between the current emission point and the part to be inspected,
the method further including the step of calculating the profile of the first surface of the part to be inspected by joining separate portions of the sets of potential positions (22) of the first surface (2) calculated for the plurality of distinct emission points.

5. Method according to any one of the preceding claims for reconstruction of the thickness profile of a part to be inspected, in which the step of emitting a plurality of ultrasound firings is carried out by means of a sensor (16), the method including a step of moving said sensor longitudinally and radially.

6. Method according to claim 5 for reconstruction of the thickness profile of a part to be inspected, in which the sensor (16) is mounted on a casing (17), said casing (17) including bearing points maintained in contact with the first surface (2) of the part to be inspected during the movement of the sensor (16), the sensor (16) being centred on the casing (17) so that the ultrasound firings emitted by the sensor (16) during steps of emitting ultrasound firings are emitted from the centre of rotation of the casing (17) at a constant distance from said first surface (2) of the part.

7. Method according to claim 6 for reconstruction of the thickness profile of a part to be inspected, in which the ultrasonic firings emitted at a respective emission point are emitted in accordance with angular scan of between 0° and 30° inclusive on either side of a straight line perpendicular to a face (18) of the casing (17) on which the sensor (16) is mounted and passing through the emission point of said sensor.

8. Method according to any one of the preceding claims for reconstruction of the thickness profile of a part to be inspected, in which the part is a part of complex shape including variations of an inside diameter and/or of an outside diameter of said part along the longitudinal axis of said part.

9. Method according to any one of the preceding claims for reconstruction of the thickness profile of a part to be inspected, further including a step of applying a respective delay law for a firing of the plurality of firings emitted for the current emission point of the plurality of ultrasound firings.

10. Method according to any one of the preceding claims, for reconstruction of the thickness profile of a part to be inspected, further including the steps of determining the coordinates of the emission point of the plurality of firings.

11. Method according to claim 10 for reconstruction of the thickness profile of a part to be inspected, in which the coordinates of the emission point are determined by means of a wire coder.

12. Method according to any one of the preceding claims for reconstruction of the thickness profile of a part to be inspected, further including the steps of correction of the calculated flight times.
